# EUROPEAN PATENT APPLICATION

(11) **EP 4 793 001 A2**
(43) Date of publication of application: **19.08.2026**
(21) Application number: 26189412.5
(22) Date of filing: 22.07.2024
(51) Int. Cl.: B25J 15/02

(54) **GRIPPER FOR A WEB OF LABELING MATERIAL AND LABELING MACHINE EQUIPPED WITH SUCH GRIPPER**

(30) Priority: 04.08.2023 IT 202300016713
(62) Document number(s) of the earlier application(s) in accordance with Art. 76 EPC: 24748041.1 / 4 754 004
(71) Applicant: Sidel Participations, 76930 Octeville-sur-Mer (FR)
(72) Inventor: BIANCHI, Alberto, 43126 Parma (IT); SILINGARDI, Roberto, 46100 Mantova (IT)
(74) Representative: Sidel Group

(57) **Abstract**

A gripper (11) for gripping a web (6) of labeling material comprising: a gripping body (15) equipped with a cavity (17); and a trapping body (16) which acts directly on the web (6) of material and is movable along a direction (D) which is transversal to the gripping body (15) between a gripping position, in which the trapping body (16) at least partially engages the cavity (17) in such a way as to trap the web (6) of labeling material between the gripping body (15) and the trapping body (16), and a release position, in which the trapping body (16) frees the cavity (17) so as to release the web (6) of labeling material.

## Description

### TECHNICAL FIELD

The present invention relates to a gripper for gripping a web of labeling material and a labeling machine equipped with said gripper, in particular in order to improve gripping of the web of labeling material of articles apt to contain a pourable product, preferably a pourable food product.

### PRIOR ART

A system for feeding the web for a labeling module for labeling articles apt to contain a pourable food product, preferably a pourable food product, is known from application PCT/EP2022/081391. The web feeding system comprises a splicing device and a positioning device (which may be a robot, for example) to automatically position the front part of the web in a splicing position with respect to the splicing device. The system is also equipped with a feeding unit for the web equipped with a gripper configured to grip a free end of the web of the coil. In particular, the gripper is configured to be positioned between an open configuration, in which the web is free, and a closed configuration, in which the web is gripped.

Document IT202100012035A1 discloses a gripper for gripping a labelling material, provided with a gripping body, a trapping body movable between a release and a gripping position, and an actuation system accessible from the upper side of the gripper. EP3760550A1 discloses a transfer unit for feeding reels of labelling material to a labelling module configured to apply labels onto articles is described. The transfer unit comprises: a support member configured to support a plurality of reels organized vertically in at least one a stack; and a robotic arm configured to remove at least one reel at a time from the stack at a gripping station and to release it at a release station; the support member being movable horizontally, during use, at least from a remote position, where the reels are arranged stacked vertically on the support member, to the gripping station, where the transfer unit is configured to eliminate a vertical distance between the stack and the robotic arm.

### DESCRIPTION OF THE INVENTION

A gripper for gripping a web of labeling material according to the present description or according to any one of the attached claims allows the web of material to be gripped in the correct position.

A labeling machine according to the present description comprises a gripper according to the description or according to the machine claims.

### BRIEF DESCRIPTION OF THE DRAWING

The present invention will now be described with reference to the attached drawings, which illustrate a non-limiting embodiment:
- Figure 1 is a schematic view from above (with parts removed for clarity) of a labeling machine according to the present invention, equipped with a gripper according to the present invention;
- Figure 2 is an enlarged side view (with parts removed for clarity) of the feeding system of the web 1, equipped with the gripper of Figure 1;
- Figure 3 is a cross-sectional and schematic view of a gripper according to the present invention, in a closed, in particular partially closed, condition;
- Figure 4 is a cross-sectional and schematic view of the gripper of Figure 3 (with parts removed for clarity) in an open condition;
- Figure 5 is a schematic and perspective view of a feeding unit of the labeling machine of Figure 1, equipped with a gripper made according to a first embodiment of the present invention;
- Figure 6 is a schematic side view of the gripper of Figure 5 in a closed condition;
- Figure 7 is a schematic and longitudinal section view of the gripper of Figure 5 in a closed condition;
- Figure 8 is a schematic side view of the gripper of Figure 5 in an open condition;
- Figure 9 is a schematic and longitudinal section view of the gripper of Figure 5 in an open condition;
- Figure 10 is a schematic and cross-sectional view of the gripper of Figure 5 in an open condition;
- Figure 11 is a schematic and perspective view of a feeding unit of the labeling machine of Figure 1, equipped with a gripper made according to a second embodiment of the present invention;
- Figure 12 is a schematic side view of the gripper of Figure 11 in a closed condition;
- Figure 13 is a schematic and longitudinal section view of the gripper of Figure 11 in a closed condition;
- Figure 14 is a schematic side view of the gripper of Figure 11 in an open condition;
- Figure 15 is a schematic and longitudinal section view of the gripper of Figure 11 in an open condition;
- Figure 16 is a schematic and cross-sectional view of the gripper of Figure 11 in an open condition.

### PREFERRED EMBODIMENTS OF THE INVENTION

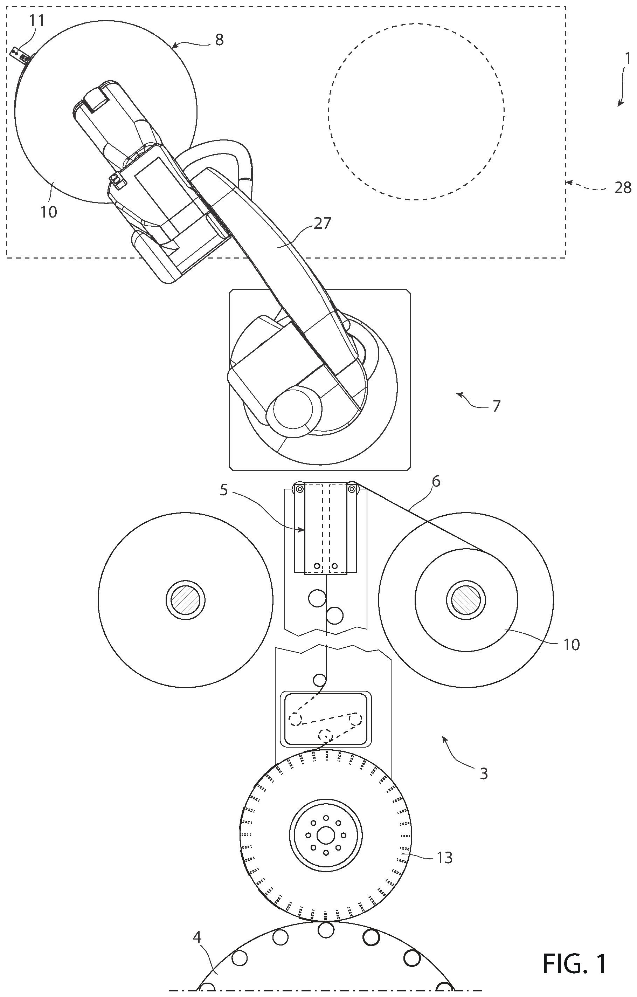

In Figure 1, number 1 indicates as a whole a labeling machine for labeling containers 2 (such as, for example, bottles, flasks, jars or containers of this kind), apt to contain a pourable product, preferably a pourable food product. The labeling machine 1 comprises a labeling module 3 and a conveyor 4 configured to convey the containers 2. The labeling machine 1 is configured to label the containers 2 by means of the labeling module 3 while they are being transported by the conveyor 4. The conveyor 4 can be a carousel.

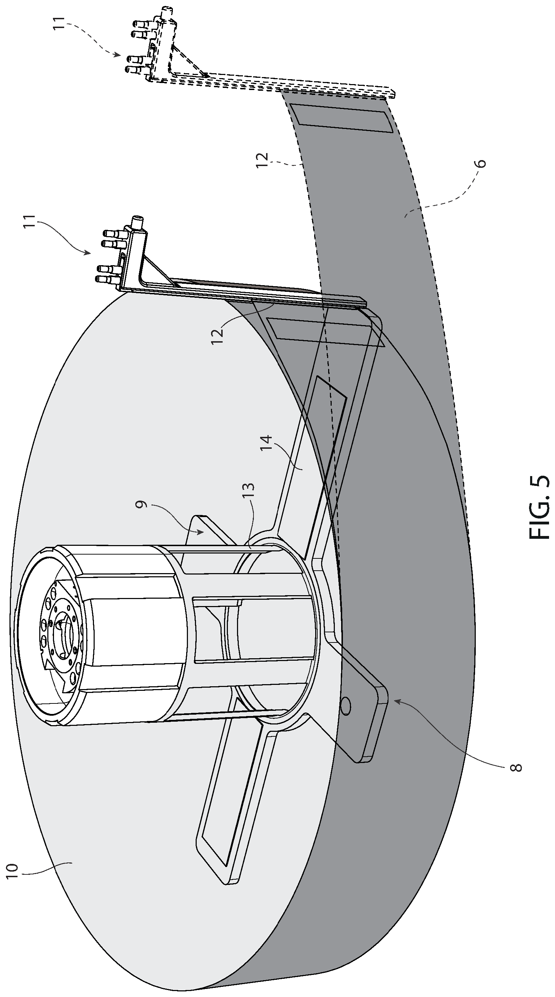

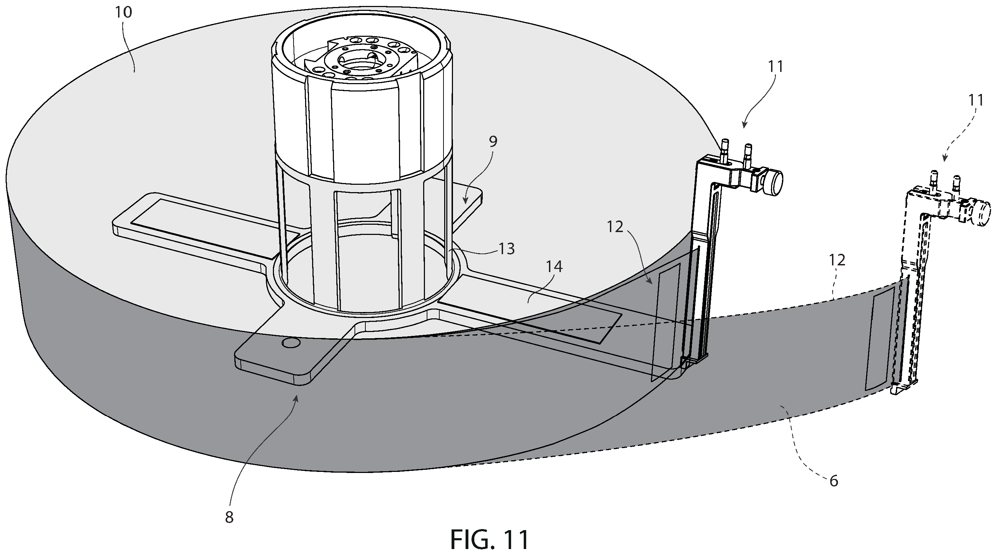

The labeling module 3 also comprises a splicing device 5. The splicing device 5 is configured to splice a web 6 currently in use with a new web 6, when the former (i.e., the one currently in use) is about to end. The web 6 that is indicated in Figure 1 is a web in use, which is about to come to an end; meanwhile, the web 6 illustrated in Figures 5 and 11 is a new web.

The labeling machine 1 comprises a feeding system 7 of the web 6 that is configured to feed a web 6 of labeling material to the labeling module 3. The feeding system 7 of the web 6 facilitates the loading of a feeding unit 8 conveying the new web 6, in order to improve the precision of the splicing operation. The feeding system 7 of the web 6 is semi-automatic, as will be described in detail below.

The feeding system 7 comprises a feeding unit 8 of the web 6. The feeding unit 8 comprises a support 9 to support a coil 10 of web 6. The feeding unit 8 comprises a gripper 11 configured to grip a free end 12 of the web 6 of the coil 10 supported.

The feeding system 7 also comprises a positioning device 27 comprising a robotic arm (robot) and is configured to automatically position the free end 12 of the web 6 in a splicing position with respect to the splicing device 5.

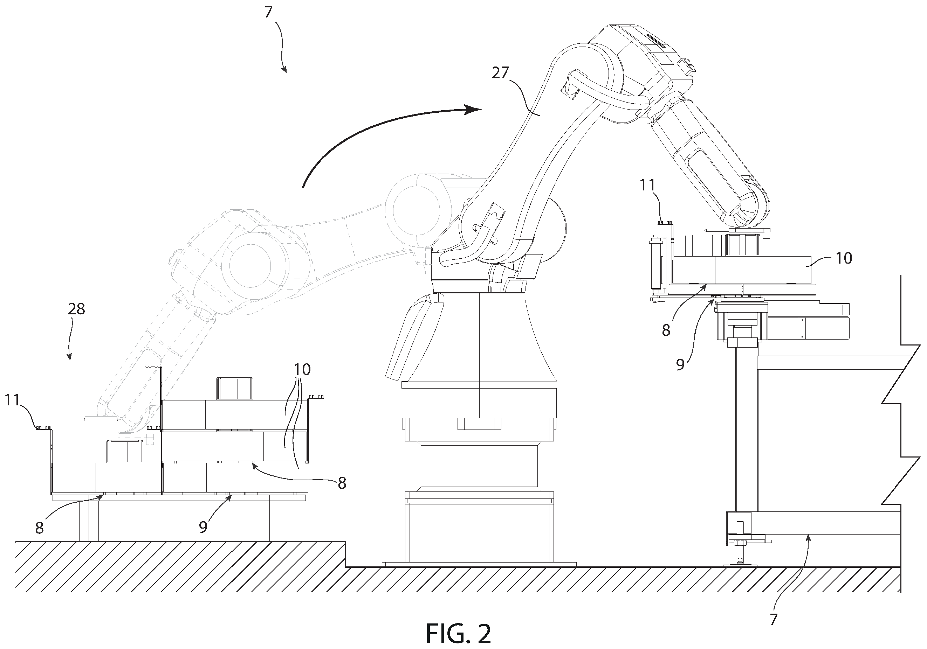

The gripper 11 is configured to be magnetically engaged with the support 9 (as illustrated in Figure 2 and in a continuous line in Figures 5 and 11) and is configured to be disengaged from the support 9 (as illustrated with a dotted line in Figures 5 and 11).

The gripper 11 could be maintained in an engaged position with the support 9 with the assistance of a mechanical contact centring system.

Preferably, engaging the gripper 11 with the support 9, by means of a magnetic connection, reduces wear and tear and the gripper 11 can be more easily disengaged from the support 9.

Preparation of the splicing operation performed by means of the splicing device 5 requires the feeding unit 8 that supports the coil 10 of the new web 6 to be loaded onto the labeling module 3.

As schematically illustrated in Figure 1, the feeding unit 8 is removed from a storage area 28 of the labeling machine 1 by the positioning device 27 and subsequently released by said positioning device onto the labeling module 3. Preparation of the splicing operation that is performed by means of the splicing device 5 also requires the free end 12 of the new web 6 to assume a splicing position with respect to the splicing device 5. Said splicing position, which may be defined as the actual splicing position, should be as close and/or as similar as possible to an ideal splicing position.

The support 9 comprises a central hub 13 and a radial arm 14 that branches radially from the hub 13. The gripper 11 is engaged with the support 9 at an axial end of the radial arm 14. In this manner, the gripper 11 is engaged with the support 9 in a radial position that optimises the coupling force between the support 9 and the gripper 11, in order to reduce the risk of accidental loosening of the coupling or the risk of disengagement, during loading of the feeding unit 8 onto the labeling module 3, and simultaneously to make the subsequent operation of disengagement of the gripper 11 as easy as possible.

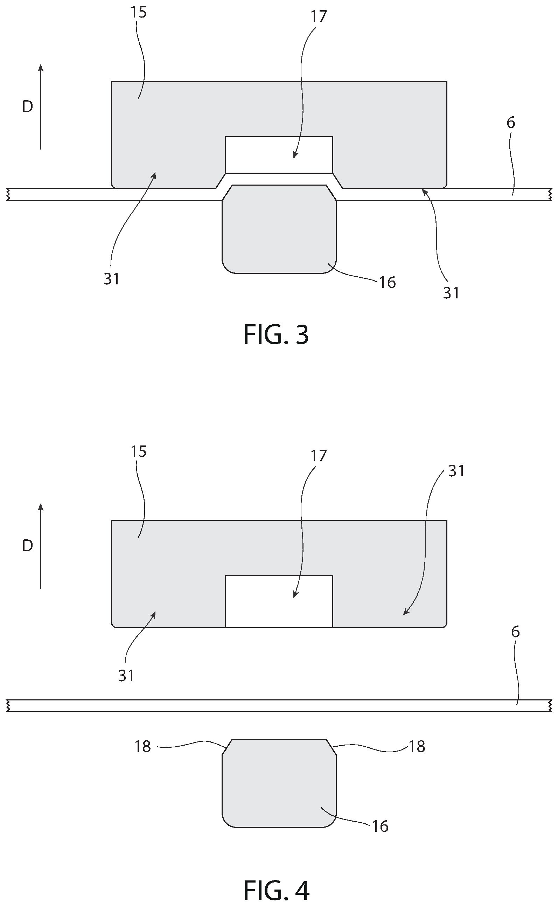

As shown in Figures 3 and 4, the gripper 11 is configured to assume a closed condition, which may correspond with a gripping condition of the free end 12 of the web 6 of the coil 10 supported, or an open condition, in which the web 6 of the coil 10 supported is not gripped. In other words, from the point of view of the web 6, the web 6 of the coil 10 supported may be grasped by the gripper 11 when the latter adopts the closed condition. In particular, when the web 6 is grasped by the gripper 11, the free end 12 is gripped by the gripper 11. The gripper 11 may, in any case, be closed even without gripping any web 6. According to the present invention, the gripper 11 comprises a gripping body 15 (in particular a fork equipped with two arms 31) and a trapping body 16.

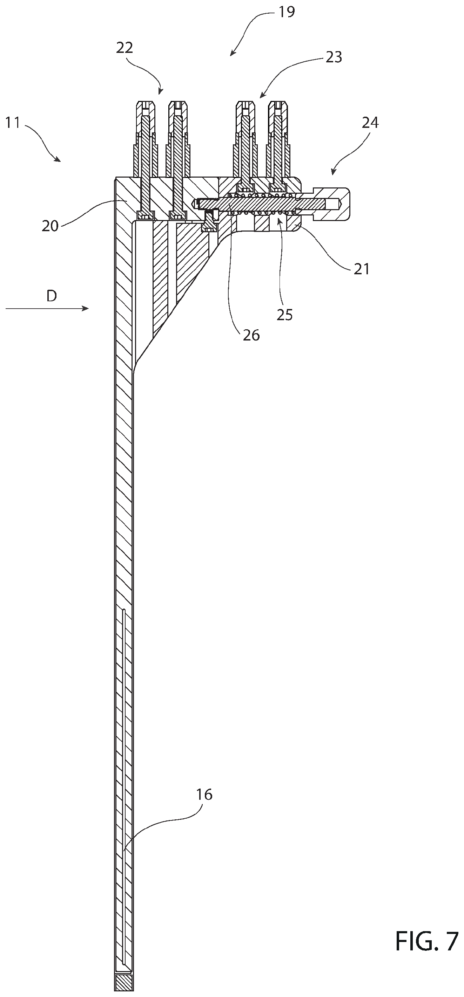

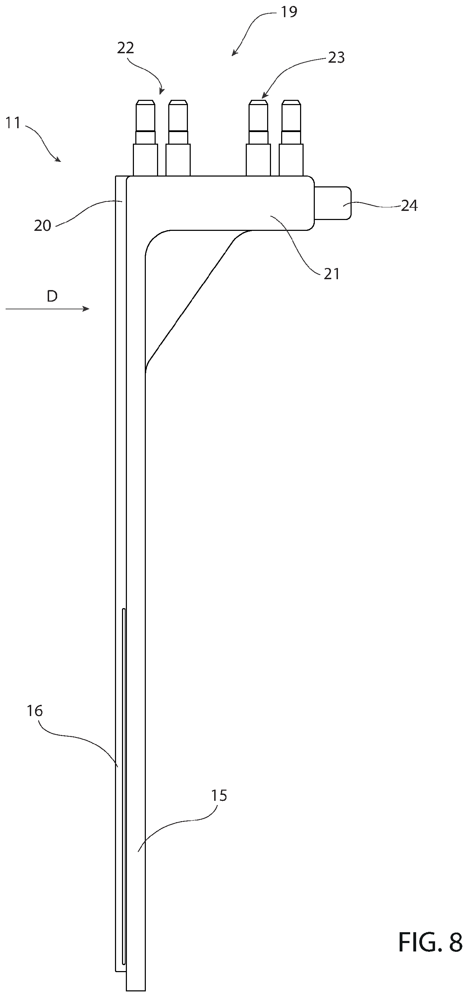

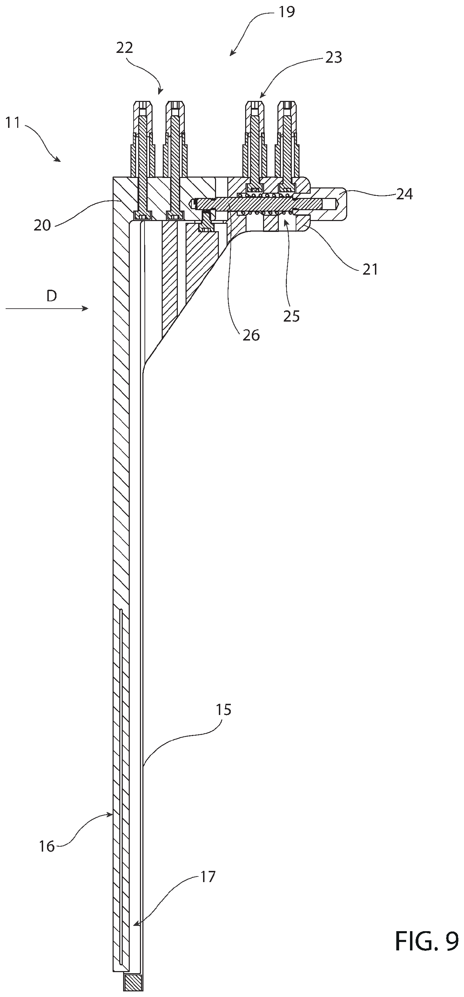

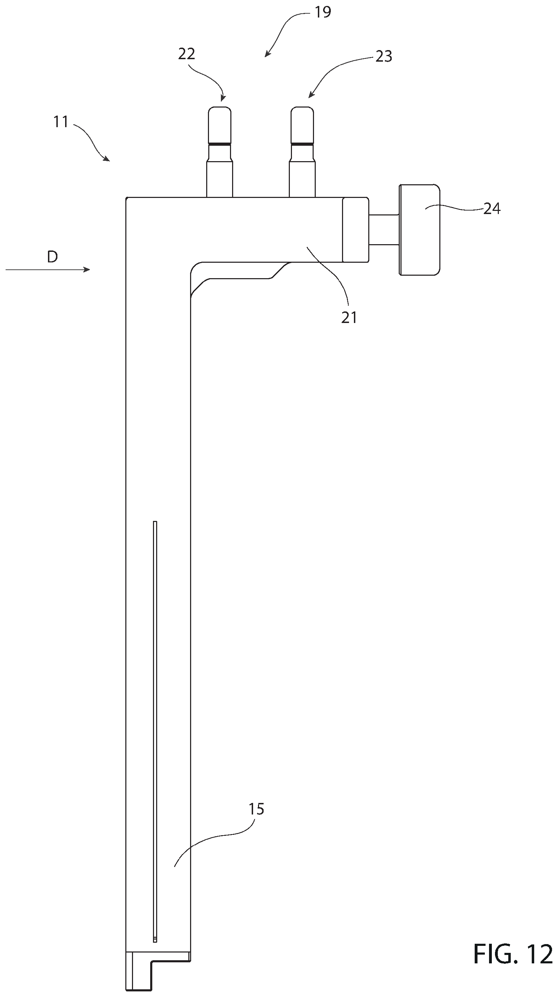

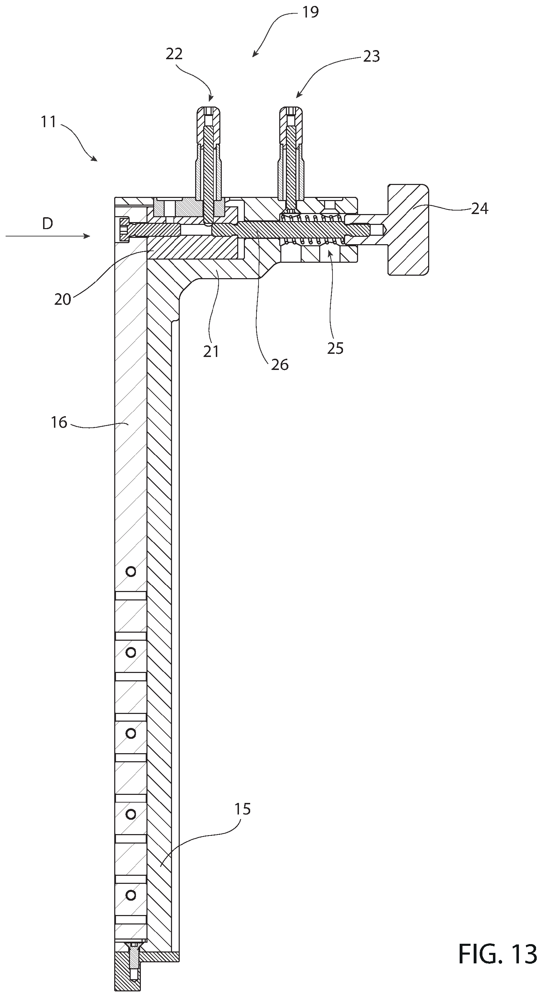

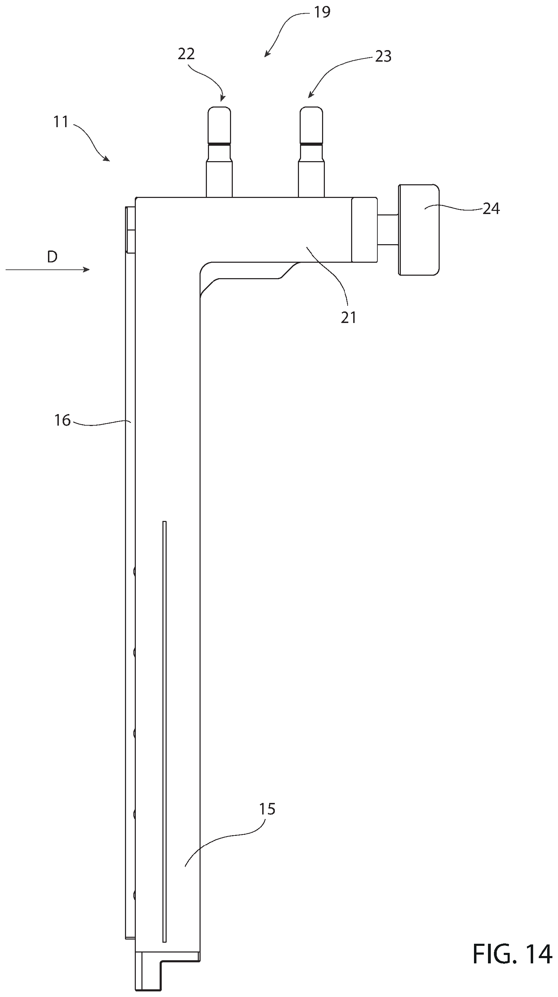

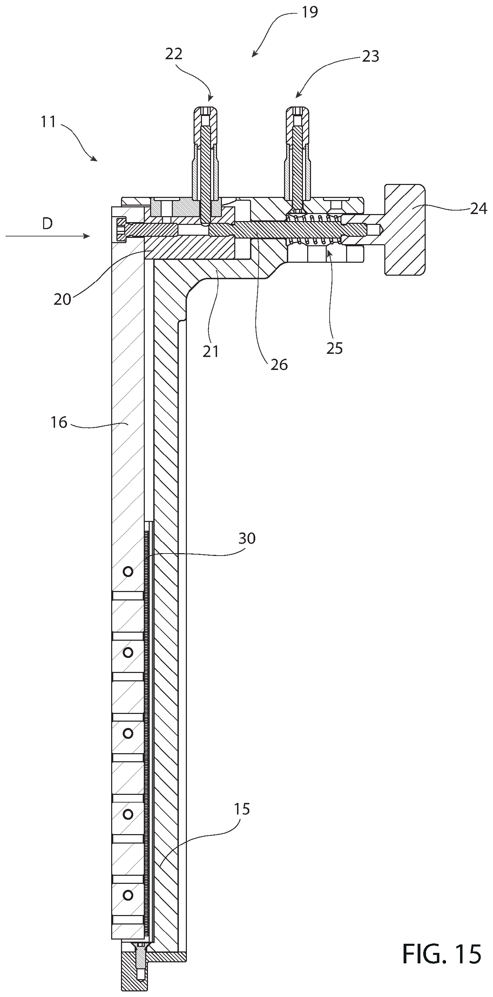

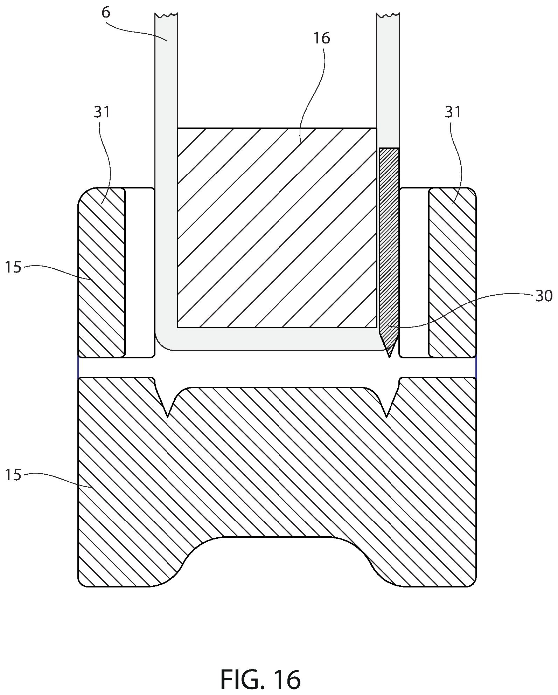

The gripping body 15 is equipped with a cavity 17 that defines a housing configured to house the web 6 and at least partially the trapping body 16. The trapping body 16 acts directly on the web 6 of material and is movable along a direction D which is transversal to the gripping body 15 between a gripping position (illustrated, for example, in Figures 3, 6, 7, 12 and 13), in which the trapping body 16 (and optionally, if present, also the web 6) at least partially engages the cavity 17, in such a way as to trap the web 6 between the gripping body 15 and the trapping body 16, and a release position (illustrated, for example, in Figures 4, 8-10, 14-16), in which the trapping body 16 frees the cavity 17, so as to release the web 6 of labeling material. Therefore, the gripping position of the trapping body 16 corresponds with the closed condition of the gripper 11, and the release position of the trapping body 16 corresponds with the open condition of the gripper 11.

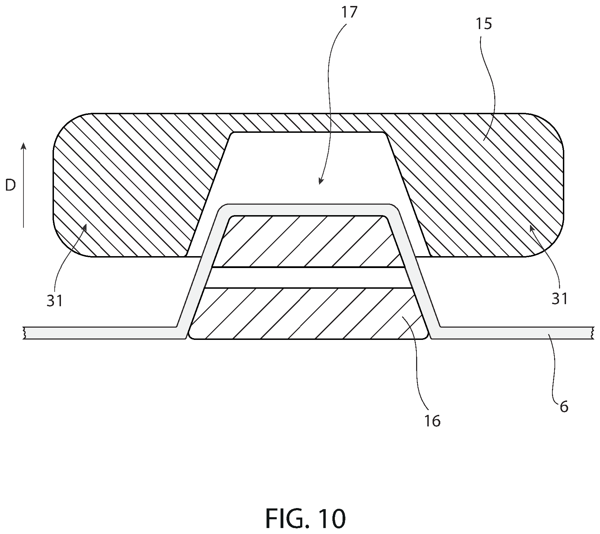

As illustrated in Figures 3 and 4, the trapping body 16 comprises chamfers 18 at the vertical edges facing the cavity 17, in order to avoid any possible jamming of the trapping body 16 during its displacement towards the cavity 17. The chamfers 18 may involve the entire vertical edge or even only a portion of it. As an alternative, according to what is illustrated in Figure 10, the gripping body 15 and the trapping body 16 have inclined side walls.

The gripper 11 comprises an actuation system 19 configured to move the trapping body 16 along direction D. In particular, according to what is illustrated in Figures 5-16, the actuation system 19 is accessible for control from an upper side of the gripper 11 and from a rear side of the gripper 11. Said rear side is more inclined, relative to said direction D, with respect to said upper side. Said upper side may be parallel to said direction D. Said rear side may be orthogonal to said direction D.

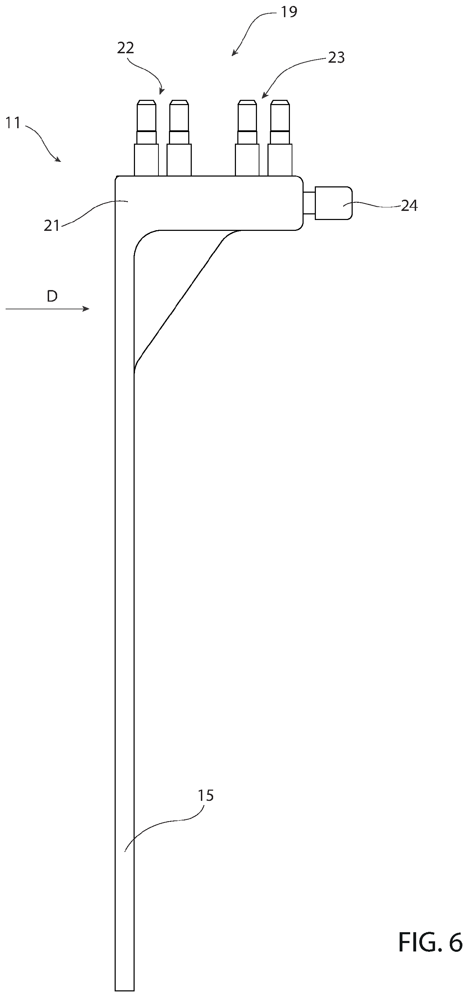

Advantageously, as illustrated in Figures 6-9, and 12-15, the actuation system 19 comprises a drive body 20 that is integral with the trapping body 16 and is movable through a support casing 21 that is, in turn, integral with the gripping body 15.

In the first embodiment, shown in Figures 5-10, the drive body 20 and the trapping body 16 are made in one piece (i.e., they are integral). In addition, or as an alternative, the support casing 21 and the gripping body 15 are made in one piece (i.e., they are integral).

The actuation system 19 is accessible from the upper side (which is transversal in particular orthogonal, to direction D) by means of at least one movable connection means 22 integral with the drive body 20 and at least one fixed connection means 23 integral with the support casing 21.

According to what is illustrated in Figures 5-9, the actuation system 19 comprises two movable connection means 22 and two fixed connection means 23.

As an alternative, as illustrated in Figures 11-15, the actuation system 19 comprises a single movable connection means 22 and a single fixed connection means 23.

Advantageously, the connection means 22 and 23 are connected to the respective body 20 and 21 by means of a threaded connection (in particular, by means of a respective screw).

Each connection means 22 and 23 is configured to connect the gripper 11 to the positioning device 27, so that the positioning device 27 can displace the trapping body 16 between the gripping position and the releasing position, by displacing each movable connection means 22 with respect to the fixed connection means 23. In other words, positioning device 27 displaces the trapping body 16 between the gripping position and the releasing position by performing a relative displacement (in particular, a relative translation) between the movable connection means 22 and the fixed connection means 23. In this manner, the positioning device 27 can release the web in the splicing position. Each connection means 22 and 23 protrudes from the upper side of the gripper 11. In particular, the movable connection means 22 is fixed to the upper side of the drive body 20, while the fixed connection means 23 is fixed to the upper side of the support casing 21.

According to what is illustrated in the attached figures, the actuation system 19 is accessible from the rear side by means of a button 24), integral with the drive body 20 and which can be operated, for example, manually by a user. The button 24 therefore substantially acts directly on the drive body 20. Therefore, the drive body 20 is movable in an automatic or semi-automatic manner through the positioning device 27 by means of the connection means 22 and 23 (in particular, through the movable connection means 22), and/or manually through the button 24.

As an alternative to the button 24, the connection means 22 and 23 may be of the pneumatic type and the actuation system 19 may therefore control opening and closing of the gripper 11 pneumatically. In this case, the action of the user is given, possibly, by the pneumatic control activated or deactivated manually, but may also be absent. Meanwhile, the drive body 20 is movable automatically through the positioning device 27 itself.

Between the drive body 20 and the support casing 21, a spring return means 25 is arranged, in particular a spring, preferably a helical spring. Said spring return means 25 has a pre-load such as to return the drive body 20 towards the support casing 21, in order to maintain the gripper 11 in the closed condition. Advantageously, the spring return means 25 is mounted coaxially onto a pin 26. The pin 26 engages (with connection) the drive body 20; meanwhile, the support casing 21 is not engaged by the pin 26 (which only passes through it, without being connected).

The gripper 11, in said closed condition, is configured to define a correct position of the free end 12 of the web 6 of the coil 10 supported 5 with respect to the gripper 11 itself. The correct position is to be considered with respect to a reference system that is integral with respect to the closed gripper 11. Basically, the web 6 can be positioned, for example by an operator, in the correct position of the free end 12, while the gripper 11 assumes the open condition. Subsequently, the gripper 11 may be switched to the closed position. In this manner, the operator can obtain a situation in which the free end 12 of the web 6 is gripped and is assuming the correct position with respect to the gripper 11 itself. The coupling between the bodies 15 and 16 of the gripper 11 allows the free end 12 to be maintained very stably in the correct position during transport of the web 6 towards the actual splicing position by the positioning device 27. The positioning device is, in fact, configured to automatically disengage the closed gripper from the support 9 and to position it in a pre-established position with respect to the splicing device 5. The combination of a pre-established position of the gripper 11 and a correct position of the free end 12 results in the ideal splicing positioning of the end 12 of the web. Therefore, the gripper 11 is configured to help the robotic positioning device 27 to obtain an actual splicing position that is as close or as similar as possible to the ideal splicing position, also thanks to the connection means 22 and 23, since the gripper 11 is configured to facilitate the operation of obtaining said correct position of the free end 12 by the operator.

Advantageously, the trapping body 16 comprises an element selected from: a parallelepiped element, as illustrated in Figures 3 and 4, a rubber pad (not illustrated), a pointed pin (not illustrated), or a blade 30, in particular serrated, as occurs in the second embodiment shown in Figures 11-16.

The gripper 11, and also the feeding system 7 and the labeling machine 1 described so far offer a large number of advantages.

The gripper 11 described so far has an advantageous, but not exclusive, application on a feeding system 7 described in patent application PCT/EP2022/081391.

The gripper 11 has the advantage of helping the user to position the free end 12 in the correct position with respect to the gripper 11, which is correlated to the splicing position. In fact, in this manner, the positioning device 27 (which is effectively unaware of the relative position of the web 6 in the gripper 11) is more configured to position the free end 12 in the ideal splicing position. Therefore, the feeding system 7 of the web 6 improves the precision of the splicing operation, also with minimisation of wear and tear.

The feeding system 7 may be semi-automatic. Its embodiment may, in fact, comprise a manual phase, such as, for example, positioning by the user of the free end 12 of the web 6 in the correct position with respect to the gripper 11, and an automatic phase, such as, for example, displacement of the gripper 11 towards the splicing device 5 by means of the positioning device 27, so as to reach the aforesaid pre-established position of the gripper and therefore the splicing position of the front free end 12 of the web.

In addition, if chamfers 18 or inclined side walls (as shown in Figure 10) are present, the web 6 is blocked between the gripping body 15 and the trapping body 16 at the chamfers 18 themselves, avoiding jamming.

## Claims

1. A feeding system (7) of a web (6) of labeling material to a labeling module (3) comprising a splicing device (5), the feeding system (7) comprising:
a) a positioning device (27) comprising a robotic arm and configured to automatically position the free end (12) of the web (6) in a splicing position with respect to the splicing device (5);
b) a feeding unit (8) for the web (6) comprising a support (9) for a reel (10) of web (6);
**characterized in that** the feeding system (7) comprises a gripper (11) for gripping the free end (12) of the tape (6) of the coil (10) supported; in which the gripper (11):
- is configured to be magnetically engaged with the support (9) and is configured to be disengaged from the support; wherein the support (9) comprises a central hub (13) and a radial arm (14) branching radially from the hub (13), the gripper (11) being engaged to the support (9) at an axial end of the radial arm (14);
- it can assume a closed configuration, in which the free end (12) is gripped by the gripper (11), and an open configuration, in which the web (6) of the reel (10) is not gripped and is free; and
- comprises a gripping body (15) provided with a cavity (17) and a trapping body (16) movable along a direction (D) which is transversal to the gripping body (15); wherein the trapping body (16) is movable between a gripping position, wherein the trapping body (16) at least partially engages the cavity (17) so as to trap the web (6) of labeling material between the gripping body (15) and the trapping body (16) to place the gripper (11) in the closed condition, and a release position, wherein the trapping body (16) releases the cavity (17) so as to release the web (6) of labeling material to place the gripper (11) in the open condition.

2. Labeling machine (1) for labeling containers (2) comprising a feeding system (7) according to claim 1.
